# EUROPEAN PATENT APPLICATION

(11) **EP 2 876 000 A1**
(43) Date of publication of application: **27.05.2015**
(21) Application number: 13819465.9
(22) Date of filing: 02.07.2013
(51) Int. Cl.: B60R 21/00

(54) **PARKING ASSISTANCE DEVICE**

(30) Priority: 18.07.2012 JP 2012159926
(71) Applicant: Aisin Seiki Kabushiki Kaisha, Kariya-shi Aichi 448-8650 (JP)
(72) Inventor: HIRAMAKI, Takashi, Kariya-shi Aichi 448-8650 (JP); ADACHI, Jun, Kariya-shi Aichi 448-8650 (JP); TACHIBANA, Hiroyuki, Kariya-shi Aichi 448-8650 (JP); YAMASHITA, Tomohisa, Nagoya-shi Aichi 450-0002 (JP); WATANABE, Kazuya, Kariya-shi Aichi 448-8650 (JP)
(74) Representative: TBK
(86) International application number: PCT/JP2013/068127
(87) International publication number: WO 2014/013861

(57) **Abstract**

Provided is a parking assisting device capable of appropriately setting a target parking space for parking a self vehicle. This parking assisting device includes an object detecting section transmitting, from a self vehicle, oscillatory waves in different directions on one lateral side of the self vehicle during traveling of the self vehicle and receiving reflected waves of the respective transmitted oscillatory waves transmitted in the different directions, a corner-portion identifying section identifying a corner portion of a non-self vehicle present on the one lateral side, based on the reflected waves obtained by the object detecting section, and a target parking space setting section setting a target parking space for the self vehicle, based on the corner portion of the non-self vehicle identified by the corner-portion identifying section.

## Description

### TECHNICAL FIELD

This invention relates to a parking assisting device configured to set a parking target space in accordance with a movement of a vehicle.

### BACKGROUND ART

Conventionally, when a driver of a vehicle carries out a perpendicular parking or a parallel parking, the driver would utilize a parking assisting device that sets a target parking position automatically. As an example of this technique, there is one described in Patent Document 1 identified below.

With the parking assisting device described in Patent Document 1, a signal having a predetermined directivity is transmitted from a vehicle body lateral face of a self vehicle toward the lateral side. Based on a time between transmission of this signal and reception of its reflected signal, a distance from the vehicle body lateral face to a parked vehicle is determined. Parked vehicle distance data indicative of the distance determined in the manner described above is stored in correlation with traveling distance data indicative of a traveling distance of the self vehicle. Based on the traveling distance data correlated with the parked vehicle distance data, a position of the center of the parked vehicle in the traveling direction of the self vehicle is determined. Then, with reference to this center position, the size of the parked vehicle in the traveling direction of the self vehicle is determined. Taking the size of the parked vehicle determined as above into consideration, the device sets an expected parking region (corresponding to "a target parking space" in the context of the present invention) at an area adjacent this parked vehicle.

### Prior Art Document

### Patent Document

Patent Document 1: Japanese Unexamined Patent Application Publication No. 2006-7875

### SUMMARY

### Problems to be Solved by Invention

According to the technique disclosed in Patent Document 1, the determination of the distance from the self vehicle body lateral face to the parked vehicle is effected with using an ultrasonic sensor having a sensing area having a conical shape. This ultrasonic sensor is attached to a vehicle body lateral face and its sensing area is moved sequentially in association with a movement of the self vehicle and an object present in the periphery is detected. The result of such detections by the ultrasonic sensor are mapped to generate a two-dimensional map. And, the detection results on this two-dimensional map are reversed in chronological sequence; then, the center portion of the parked vehicle is estimated from a position having a large amount of overlap. For this reason, in case a vehicle body surface (body surface) of the parked vehicle onto which the beam from the ultrasonic sensor is irradiated is not perpendicular to an axis used for the above-described chronological reversal, the center position is not always calculated accurately and a significant error can occur. Therefore, it is conceivable to set an axis perpendicular to the vehicle body surface when the chronological reversal is to be effected. However, this will require a great amount of calculation, and for allowing the calculation to be completed quickly, it will require a high-performance arithmetic processing device, which may lead to cost increase. Moreover, since the above technique effects the reversal and estimates the center portion of the parked vehicle from a position having a large amount of overlap, the technique is unable to effect the estimation appropriately if no obstacle or the like is present in line symmetry.

Furthermore, when the shape of a parked vehicle is to be reproduced with utilization of the ultrasonic sensor described above, a problem occurs in reproduction of such a portion as a corner portion of the parked vehicle. Namely, in the case of an ultrasonic sensor having a conical sensing area, the sensor will receive reflection of ultrasonic wave from the vehicle lateral face, before its sensing beam can reach the vehicle body front face, so that accurate reproduction of the shape of this corner portion of the parked vehicle is not possible. In such case, for the sake of contact avoidance, it becomes necessary to approximate the size of the reproduced parked vehicle greater than the real parked vehicle, which results in turn in making the area settable as an expected parking area for the self vehicle smaller. Further, in case the parked vehicle is parked within a predetermined parking space, yet with an offset to either side therein, the data reproduction thereof can be effected erroneously, as if this parked vehicle were parked to protrude from the parking space. Therefore, even when there actually exists a parking space available adjacent the predetermined parking space, the device may fail to set any expected parking area.

In view of the above-described problems, the object of the present invention is to provide a parking assisting device capable of appropriately setting a target parking space for parking a self vehicle.

### Solution to Problems

For accomplishing the above-noted object, according to a characterizing feature of a parking assisting device relating to the present invention, the parking assisting device comprises:
an object detecting section transmitting, from a self vehicle, oscillatory waves in different directions on one lateral side of the self vehicle during traveling of the self vehicle and receiving reflected waves of the respective transmitted oscillatory waves transmitted in the different directions;
a corner-portion identifying section identifying a corner portion of a non-self vehicle present on the one lateral side, based on the reflected waves obtained by the object detecting section; and
a target parking space setting section setting a target parking space for the self vehicle, based on the corner portion of the non-self vehicle identified by the corner-portion identifying section.

With the above-described characterizing feature, since oscillatory waves are transmitted in different directions on one same lateral side of the self vehicle, it is possible to vary incidence angles of the respective oscillatory waves to reach a predetermined portion of the non-self vehicle. Thus, the directions of the reflected waves for the respective oscillatory waves can also be made different from each other. Then, of these oscillatory waves, with using an appropriately reflected wave(s) in accordance with the shape of the corner portion of the non-self vehicle, accurate identification of the corner portion of the non-self vehicle is made possible. Therefore, with reference to the identified corner portion, it is possible to set a target parking space for parking a self vehicle easily and accurately.

Further, preferably, the corner-portion identifying section is configured to produce shape data representing a shape of the non-self vehicle in correspondence with the respective oscillatory waves transmitted in the different directions and to identify opposed ends of an overlapped portion in the produced shape data as the corner portion of the non-self vehicle.

With the above arrangement, the shape of the non-self vehicle can be identified with using the shape data produced from the reflected wave which is presumed to have resulted from appropriate reflection, in accordance with this shape of the non-self vehicle. Therefore, the corner portion of the non-self vehicle can be identified easily.

Still preferably, the device includes a plurality of the object detecting sections.

With the above arrangement, it becomes unnecessary to change the positions or orientations of the object detecting sections once fixedly disposed. Therefore, it is not necessary to provide an actuator or a controller for varying the directions of the oscillatory waves transmitted from the object detecting section. Thus, the device can be realized at low costs.

Still preferably, the object detecting section is configured to transmit the oscillatory waves in a direction offset toward a front side of the self vehicle relative to a width direction of the self vehicle and in a direction offset toward a rear side of the self vehicle relative to the width direction of the self vehicle.

With the above-described arrangement, it is possible to transmit the oscillatory waves in different directions from e.g. the right-front side and the left-front side, relative to a front end portion of the non-self vehicle. Therefore, as reflected waves from the different directions can be obtained, the corner portion of the non-self vehicle can be identified accurately.

Alternatively, the object detection section can be configured to transmit the oscillatory waves in a width direction of the self vehicle and in a direction offset toward a front side of the self vehicle or a rear side of the self vehicle relative to the width direction of the self vehicle.

With this alternative arrangement too, the oscillatory waves can be transmitted in different directions relative to e.g. the front end of the non-self vehicle, from the front face and one of the right-front side and right-left side. Therefore, as reflected waves from the different directions can be obtained, the corner portion of the non-self vehicle can be identified accurately.

Still further alternatively, the object detecting section can be configured to transmit the oscillatory waves in a direction offset toward a front side of the self vehicle or a rear side of the self vehicle relative to a width direction of the self vehicle and in a direction different from the offset direction on the offset side.

With this alternative arrangement too, the oscillatory waves can be transmitted in two different directions on one of the right-front side and the right-left side, relative to e.g. the front end of the non-self vehicle. Therefore, as reflected waves from the different directions can be obtained, the corner portion of the non-self vehicle can be identified accurately.

Still preferably, the corner-portion identifying section is configured to identify two corner portions of the non-self vehicle; and the target parking space setting section is configured to set a front end position of the target parking space by causing a center portion between the two identified corner portions to move parallel with a movement path until it reaches a position of detection of the corner portions by the self vehicle.

With this arrangement, the front end center position of the target parking space can be set easily.

Preferably, the corner-portion identifying section is configured to identify two corner portions of the non-self vehicle; and the target parking space setting section is configured to set the target parking space along a direction perpendicular to a line interconnecting the two identified corner portions.

With the above-described arrangement it is readily possible to set the orientation of the target parking space.

### BRIEF DESCRIPTION OF THE DRAWINGS

[Fig. 1] is a view schematically showing a configuration of a parking assisting device,
[Fig. 2] is a view schematically showing a configuration of a parking assisting device,
[Fig. 3] is a view showing one example of result of detection by an object detecting section and result of identification of an end portion of a non-self vehicle,
[Fig. 4] is a view showing a series of operations relating to setting of a target parking space,
[Fig. 5] is a view illustrating setting of a parking space relating to another embodiment,
[Fig. 6] is a view illustrating setting of a parking space relating to another embodiment,
[Fig. 7] is a view illustrating a disposing example of object detecting sections relating to another embodiment,
[Fig. 8] is a view illustrating a disposing example of object detecting sections relating to another embodiment,
[Fig. 9] is a view illustrating a disposing example of object detecting sections relating to another embodiment,
[Fig. 10] is a view illustrating a disposing example of object detecting sections relating to another embodiment,
[Fig. 11] is a view illustrating a disposing example of object detecting sections relating to another embodiment,
[Fig. 12] is a view illustrating a disposing example of object detecting sections relating to another embodiment,
[Fig. 13] is a view illustrating a disposing example of object detecting sections relating to another embodiment,
[Fig. 14] is a view illustrating a disposing example of object detecting sections relating to another embodiment, and
[Fig. 15] is a view illustrating a disposing example of object detecting sections relating to another embodiment.

### MODES OF EMBODYING INVENTION

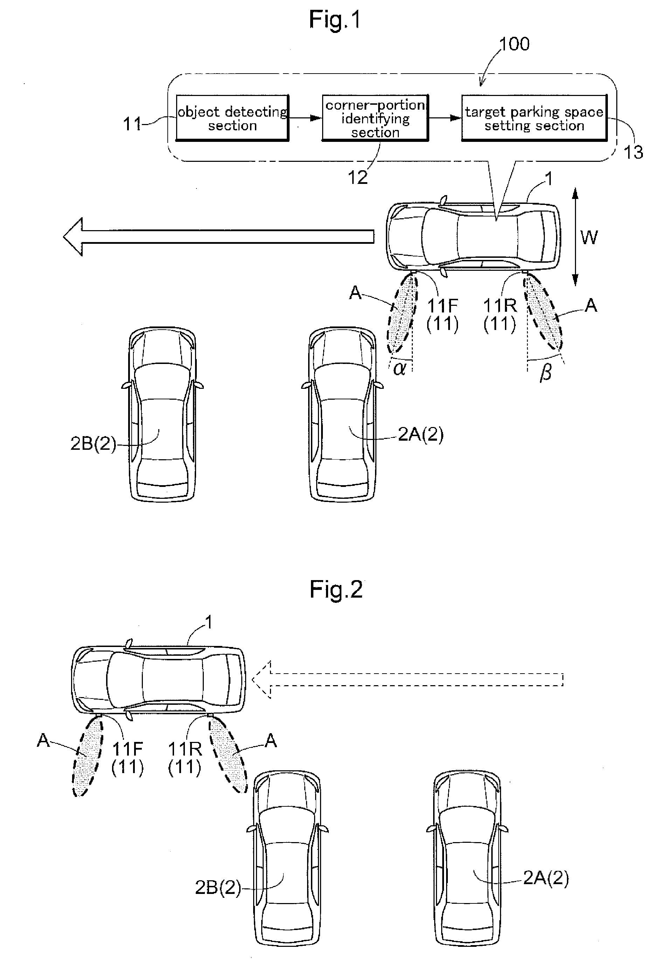

A parking assisting device 100 relating to the present invention has a function of accurately setting a target parking space where a self vehicle is to be parked. Next, the present embodiment will be explained in details. Fig. 1 shows a block diagram schematically showing a configuration of this parking assisting device 100. As shown in Fig. 1, the parking assisting device 100 as mounted in a self vehicle 1 includes respective functional sections of an object detecting section 11, a corner-portion identifying section 12, and a target parking space setting section 13. The respective functional sections above are comprised of a hardware and/or software including a CPU as a core unit thereof for effecting various operations associated with setting of a target parking space S.

The object detecting section 11 transmits, from a self vehicle 1, oscillatory waves in different directions on one lateral side of the self vehicle 1 during traveling of the self vehicle 1. The above language "one lateral side of the self vehicle 1" means one of the left lateral side and the right lateral side of the self vehicle 1. The language "different directions" means different directions on each one of the left lateral side and the right lateral side of the self vehicle 1. In the instant embodiment, the different directions are comprised of one slightly front-wise direction on the left lateral side and the other slightly rear-wise direction on the same side. The "oscillatory waves" refer to signals which propagate in the air while being oscillated at a predetermined frequency.

In the instant embodiment, for the sake of easier understanding, the explanation will be made on an assumption of one lateral side being the left lateral side of the self vehicle 1. Fig. 1 illustrates such an example, with a mark A being provided to transmission range of the oscillatory wave. As shown in Fig. 1, oscillatory waves are transmitted on the left lateral side of the self vehicle 1 and the oscillatory waves are transmitted in a plurality of directions on the left lateral side of the self vehicle 1.

In the instant embodiment, a plurality of object detecting sections 11 are provided. Especially in this embodiment, as shown in Fig. 1, there are provided two object detecting sections 11. When distinction between these two object detecting sections 11 is necessary, one provided on the side of the front portion of the self vehicle 1 will be denoted with an alphanumeric notation 11 F and the other provided on the side of the rear portion of the self vehicle 1 will be denoted with an alphanumeric notation 11R, respectively.

The object detecting sections 11 transmit oscillatory waves in a direction offset toward the front side of the self vehicle 1 relative to the width direction of the self vehicle 1 and in a direction offset toward the rear side of the self vehicle 1. Here, the width direction of the self vehicle 1 refers to the direction perpendicular to the front-rear direction of the self vehicle 1, this corresponds to the direction denoted with a mark W in Fig. 1. The direction offset toward the front side of the self vehicle 1 refers to a direction in which an azimuth of the self vehicle 1 toward the front side relative to the width direction W remains within the acute angle range. In Fig. 1, transmission is effected with the transmission center of the transmission range A of the oscillatory wave transmitted from the object detecting section 11 F having an offset of an angleatoward the front side relative to the width direction W.

On the other hand, the direction offset toward the rear side of the self vehicle 1 refers to a direction in which relative to the width direction W, an azimuth of the self vehicle 1 toward the rear side remains within the acute angle range. In the example shown in Fig. 1, transmission is effected with the transmission center of the transmission range A of the oscillatory wave transmitted from the object detecting section 11 R having an offset of an angle β toward the rear side relative to the width direction W. The object detecting section 11, that is, the object detecting section 11 F and the object detecting section 11 R, transmit oscillatory waves in such directions respectively. Therefore, in the instant embodiment, the object detecting sections 11 transmit, on the left lateral side of the self vehicle 1, oscillatory waves in the plurality of directions having the angle α and the angle β respectively, relative to the width direction W. Each of these object detecting sections 11 can be constituted by using e.g. an ultrasonic sensor, a laser radar, etc.

Further, the object detecting sections 11 acquire reflected waves of the respective oscillatory wave transmitted in the different directions. Here, the air-propagated oscillatory wave is reflected if/when reaching an object present in the periphery of the self vehicle 1. The object detecting section 11 acquires such reflected wave and then calculates the shape of the object and a distance from the self vehicle 1 to this object. The oscillatory waves in this embodiment are transmitted in the two directions on the left lateral side in accordance with traveling of the self vehicle 1 as illustrated in Fig. 1. More particularly, while the self vehicle 1 travels from the position shown in Fig.1 to reach the position shown in Fig. 2, the oscillatory waves are transmitted continuously in the two directions. Therefore, in accordance with the movement of the self vehicle 1, different results are obtained from reflected waves from a same object. The object detecting sections 11 obtain reflected waves of the respective oscillatory waves. These results obtained by the object detecting sections 11 are transmitted to the corner-portion identifying section 12 which will be described next.

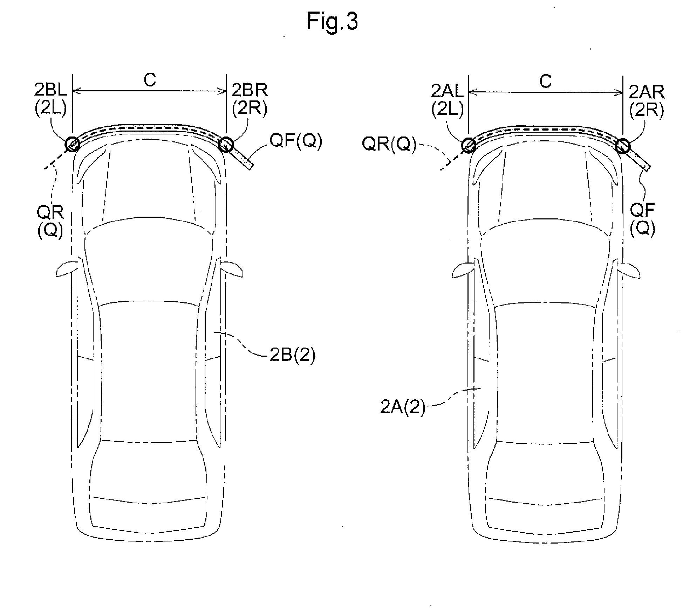

Based on the reflected waves acquired by the object detecting sections 11, the corner-portion identifying section 12 identifies corner portions 2R, 2L of a non-self vehicle 2 which is present on one lateral side. In this, the oscillatory waves are irradiated in different directions from the object detecting sections 11 as described above and the reflected waves of these respective irradiated oscillatory waves are acquired. Therefore, the object detecting sections 11 acquire a plurality of kinds of oscillatory waves corresponding to the different directions. Thus, the reflected waves acquired by the object detecting sections 11 correspond to reflected waves of the plurality of kinds. To the corner-portion identifying section 12, results of the plurality of kinds of reflected waves acquired by the object detecting sections 11 are transmitted. Further, in this particular embodiment, the language "one lateral side" refers to the left lateral side. Therefore, the corner-portion identifying section 12 identifies the corner portions 2R, 2L of the non-self vehicle 2 which is present on the left lateral side of the self vehicle 1. The arrangement relating to this identification of the corner portions 2R, 2L is illustrated in Fig. 3.

Fig. 3 shows result of production of shape data reproducing the shape of the object (non-self vehicle 2) based on the irradiated waves acquired when the self vehicle 1 has run from the position shown in Fig. 1 to the position shown in Fig. 2, that is, shape data reproducing the shape produced in correspondence with the oscillatory waves transmitted in the different directions. Such shape data is produced respectively by the corner-portion identifying section 12. In this embodiment, as described above, the object detecting sections 11, that is, the object detecting section 11 F and the object detecting section 11 R respectively transmit oscillatory waves in different directions. Then, the corner-portion identifying section 12 produces shape data with using the reflected waves corresponding to the oscillatory wave transmitted from the object detecting section 11 F and produces also shape data with using the reflected waves corresponding to the oscillatory wave transmitted from the object detecting section 11 R. The shape data are stored with the reflected wave and the position of acquisitions of this reflected wave being linked to each other and produced with using a mapping technique which per se is known. More specifically, a map indicative of a situation in the periphery of the self vehicle 1 is produced from the results of detection by the object detecting sections 11 F, 11R and vehicle posture information indicative of a moving direction and a moving speed of the self vehicle 1. In this case, the shape data based on the respective detection results of the object detecting sections 11 F, 11 R are shown in superposition with each other in a single map. Fig. 3 shows two non-self vehicles 2 which are parked side by side (both perpendicularly parked) on the left side of the self vehicle 1 shown in Fig. 1 and Fig. 2. Here, explanation will be made with providing the two non-self vehicles 2 with marks 2A, 2B respectively. For the non-self vehicles 2A, 2B, shape data QF produced based on the reflected wave from the object detecting section 11 F and shape data QR produced based on the reflected wave from the object detecting section 11 R are shown in superposition. In the following discussion, when there is no need for distinction between the shape data QF produced based on the reflected wave from the object detecting section 11 F and the shape data QR produced based on the reflected wave from the object detecting section 11 R, the data will be referred to generically as "shape data Q of the object detecting section 11 ".

Fig. 3 shows the shape data QF produced based on the reflected wave from the object detecting section 11F and the shape data QR produced based on the reflected wave from the object detecting section 11 R. Then, the corner-portion identifying section 12 identifies opposed ends of overlapped portion in the produced shape data Q as the corner portions 2R, 2L of the non-self vehicle 2. Here, the language "produced shape data Q" means the shape data Q produced by the object detecting section 11 shown in Fig. 3 for example. The language "overlapped portion" means an overlapped portion in the shape data Q based on the reflected waves from a same object (non-self vehicle 2). That is, the "overlapped portion" refers to a portion of overlap between the shape data QF by the object detecting section 11 F and the shape data QR by the object detecting section 11 R shown in Fig. 3. And, such overlapped portion corresponds to an area denoted with a mark C.

The overlapped portion C can be a portion of complete overlap (agreement) between the the shape data QF by the object detecting section 11 F and the shape data QR by the object detecting section 11 R or can also be a portion where the shape data QF by the object detecting section 11 F and the shape data QR by the object detecting section 11 R are overlapped in a predetermined range. In such case, the overlapped portion C can be identified in a manner described below. On the map produced with using the mapping technique as described above, of the shape data QF by the object detecting section 11 F and the shape data QR by the object detecting section 11 R, shape data QF, QR present within a predetermined distance will be used. On the other, if the shape data QF and the shape data QR are apart from each other by a distance greater than the predetermined distance, these data will not be used. Since only reliable data are used, the overlapped portion C can be identified with accuracy.

Alternatively, the map produced with using the mapping technique as described above may be divided into predetermined regions. And, if the shape data QF by the object detecting section 11 F and the shape data QR by the object detecting section 11 R are present within such predetermined region, the shape data Q of this region can be employed. In this case too, the overlapped portion C can be identified with accuracy.

The corner-portion identifying section 12 identifies the opposed ends of such overlapped portion C as the corner portions 2R, 2L of the non-self vehicle 2. Preferably, these opposed ends are identified from the foremost point and the rearmost point of the overlapped portion C relative to a traveling direction of the self vehicle 1. In the following discussion, shape data relating to the non-self vehicle 2A will be denoted with marks 2AR, 2AL and shape data relating to the non-self vehicle 2B will be denoted with marks 2BR, 2BL, respectively. The corner portions 2R, 2L of the non-self vehicle 2 identified by the corner-portion identifying section 12 in the manner described above are transmitted to the target parking space setting section 13 which will be described next.

The target parking space setting section 13 sets a target parking space S for the self vehicle 1, based on the identified corner portions 2R, 2L of the non-self vehicle 2. Here, the identified corner portions 2R, 2L of the non-self vehicle 2 mean the corner portions 2R, 2L identified by the corner-portion identifying section 12. In this embodiment, as shown in Fig. 3, for one non-self vehicle 2, two corner portions 2R, 2L are identified. The target parking space setting section 13 sets the target parking space S based on these corner portions 2R, 2L.

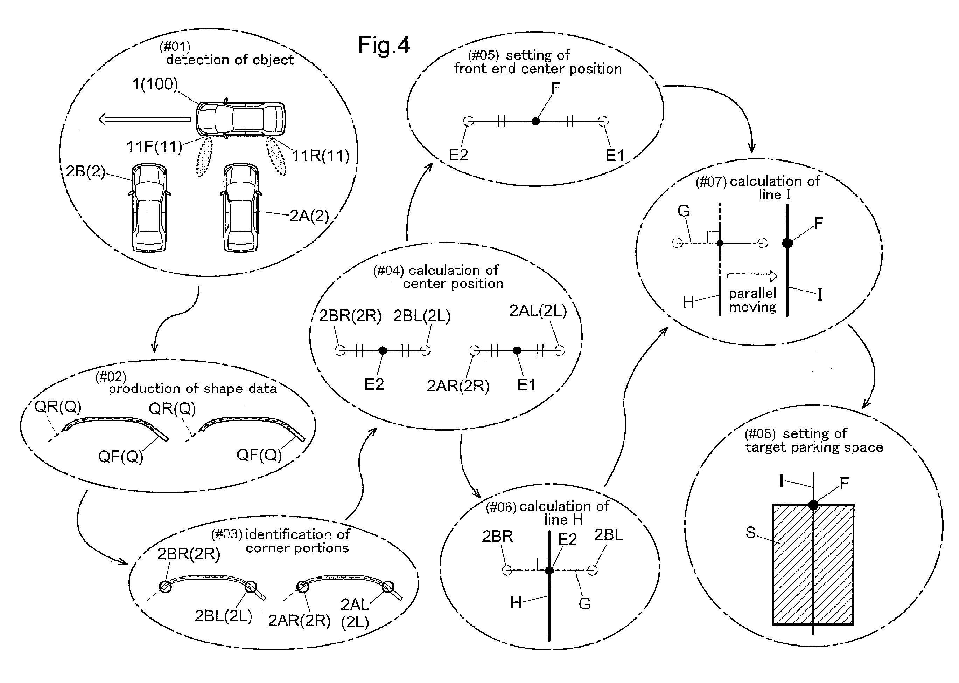

Next, with reference to Fig. 4, operations relating to the setting of the target parking space S by the target parking space setting section 13 will be explained. Firstly, as described above, the detection of the non-self vehicle 2 present on the left lateral side of the self vehicle 1 by the object detecting sections 11 is effected (step #01). In Fig. 4 too, there will be explained an example wherein two vehicles (2A, 2B) are parked as the non-self vehicle 2. The corner-portion identifying section 12 produces the shape data Q based on the reflected waves (step #02).

Based on these shape data, the corner-portion identifying section 12 identifies the corner portions 2AR, 2AL of the non-self vehicle 2A and the corner portions 2BR, 2BL of the non-self vehicle 2B (step #03). The target parking space setting section 13 obtains a center position between the two corner portions 2R, 2L identified by the corner-portion identifying portion 12. The identified two corner portions 2R, 2L refer to the corner portions 2R, 2L of each single non-self vehicle. Therefore, the target parking space setting section 13 obtains a center potion E1 between the corner portion 2AR and the corner portion 2AL and a center potion E2 between the corner portion 2BR and the corner portion 2BL (step #04).

The target parking space setting section 13 further obtains a center position F between the center position E1 and the center position E2 (step #05). This center position F corresponds to the center position of the front end of the self vehicle 1 when parked at the target parking space S.

The target parking space setting section 13 sets the target parking space S along a direction perpendicular to the line interconnecting the identified two corner portions 2BR, 2BL. More particularly, the target parking space setting section 13 obtains a virtual line G interconnecting the two identified corner portions 2BR, 2BL and further obtains a virtual line H perpendicular to the line G (step #06). Then, the target parking space setting section 13 effects a translation (i.e. a parallel movement) of the line H to cause this line H to pass the center position F obtained at step #05, thereby to obtain a line I (step #07). The target parking space setting section 13 sets the target parking space S with using the line I at the center and the center position F as the front end center (step #08). The target parking space S can be set in agreement with a known size of the self vehicle 1 or can be set to be slightly larger than the size of the self vehicle 1. The parking assisting device 100 sets the target parking space S in this way.

As described above, with the parking assisting device 100 of the present invention, since oscillatory waves are transmitted in different directions on a same lateral side of the self vehicle 1, it is possible to make incidence angles of the respective oscillatory waves reaching a predetermined portion of the non-self vehicle 2 different from each other. Thus, the directions of the reflected waves for the oscillatory waves are also made different from each other. And, of these reflected waves, a reflected wave appropriately reflected is employed, in accordance with the shapes of the corner portions 2R, 2L of the non-self vehicle 2, whereby the corner portions 2R, 2L of this non-self vehicle 2 can be identified with high accuracy. Therefore, with reference to the identified corner portions 2R, 2L, the target parking space S for parking the self vehicle 1 can be set easily and accurately.

### [Other Embodiments]

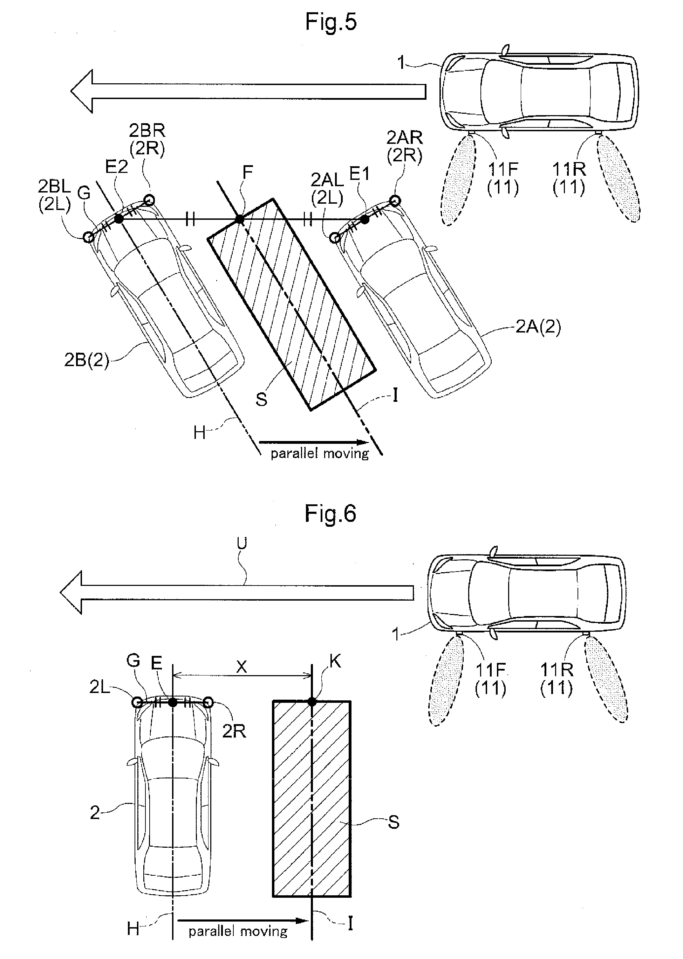

In the foregoing embodiment, there was explained the example in which the non-self vehicles 2 are perpendicularly parked to be perpendicular to the moving path of the self vehicle 1. However, the application of the present invention is not limited thereto. For instance, it is also possible as a matter of course to apply the present invention to a case of setting a target parking space S for parallel-parking the self vehicle 1. Further, for instance, as shown in Fig. 5, it is possible to apply the present invention to a case in which non-self vehicles 2 are parked not perpendicularly to the moving path of the self vehicle 1. Namely, shape data Q are acquired by the object detecting section 11, whereby the corner portions 2R, 2L of the non-self vehicles 2. Then, the center positions E1, E2 of these acquired corner portions 2R, 2L and further the center position F therebetween is obtained, thereby to obtain the front end center position of the target parking space S. Further, a line H perpendicular to a line G passing the corner portions 2BR, 2BL of the non-self vehicle 2B is obtained and then this line H is translated (i.e. move in parallel) so as to pass the center position F, thereby to obtain a line I, whereby the target parking space S can be obtained appropriately.

In the foregoing embodiment, there was explained the example in which two non-self vehicles 2 are parked. However, the application of the present invention is not limited thereto. The present invention can be applied also to a case in which only one non-self vehicle 2 is parked. Such example is illustrated in Fig. 6. The corner-portion identifying section 12 produces shape data Q of the non-self vehicle 2 and identifies the corner portions 2R, 2L of this non-self vehicle 2. Then, the target parking space setting section 13 obtains the center position E between the corner portions 2R, 2L and effects translation of the obtained center position E along a moving path U until the self vehicle 1 reaches the position where the corner portions 2R, 2L were detected, thereby to set the front end position of the target parking space S. More particularly, the target parking space setting section 13 effects the translation of the center position E along the moving path U from the position before the detection of the corner portions 2R, 2L by the predetermined distance to the position of the detection of the corner portions 2R, 2L. This translation is effected by an amount X prescribed from the space needed for parking the self vehicle 1. This point is designated as K. Then, the target parking space setting portion 13 obtains a line H passing through the center position E and extending perpendicular to the line interconnecting the corner portions 2R, 2L and then obtains a line I passing the above point K and parallel with the line H. The target parking space setting portion 13 sets the target parking space S based on this line I. In this way, even when only one non-self vehicle 2 is present too, the target parking space S can be set appropriately.

In the foregoing embodiment, it was explained that two object detecting sections 11 are provided. However, the application of the present invention is not limited thereto. It is also possible to provide three or more object detecting sections 11. Further, it is also possible to provide only one object detecting section 11. In this case, it is preferred to arrange such that oscillatory wave transmitted from the single object detecting section 11 is switched into different directions one after another.

In the foregoing embodiment, there was explained the example in which the object detecting sections 11 transmit the oscillatory waves toward the left lateral side of the self vehicle 1. However, the application of the present invention is not limited thereto. Instead of the arrangement of transmitting oscillatory waves toward the left lateral side, it is possible to employ an arrangement of transmitting oscillatory waves toward the right lateral side. Further, it is also possible as a matter of course to employ an arrangement of transmitting oscillatory waves toward not only the right lateral side, but also the left lateral side.

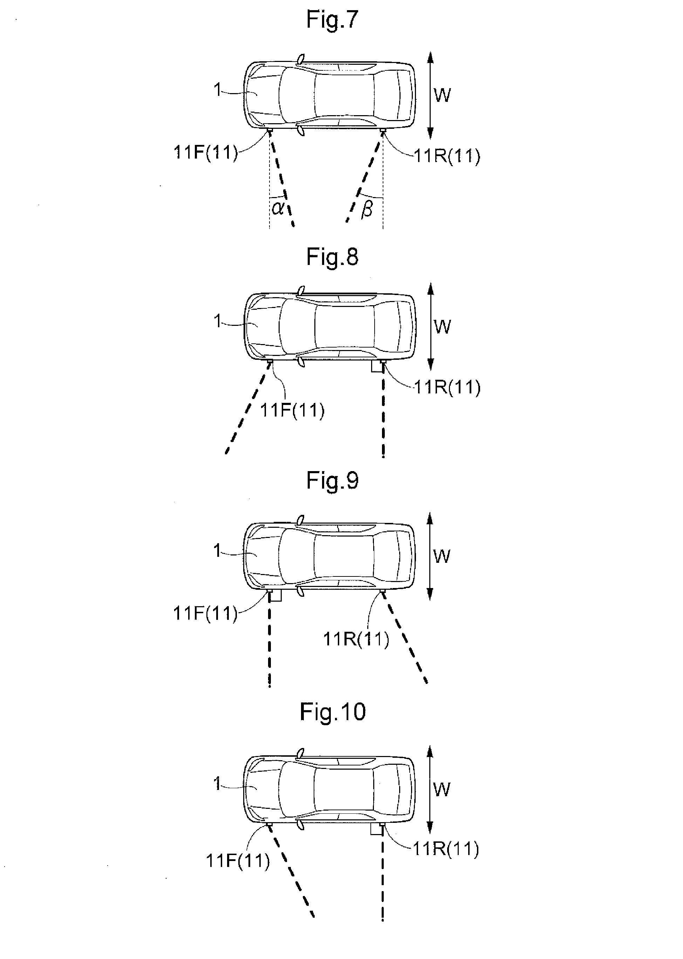

In the foregoing embodiment, there was explained an exemplary arrangement in which the object detecting section 11 F is offset toward the front side relative to the width direction W and the object detecting section 11 R is offset toward the rear side relative to the width direction W. Instead, as shown in Fig. 7, it is also possible to arrange such that the object detecting section 11 F is offset toward the rear side relative to the width direction W and the object detecting section 11 R is offset toward the front side relative to the width direction W. And, the amounts of these offsets (angleaand angle β) can be same. That is, the angleαof the offset of the object detecting section 11 F toward the rear side relative to the width direction W and the angleβof the offset of the object detecting section 11 R toward the front side relative to the width direction W can be a same angle. And, it is also possible as a matter of course to set the angleαand the angleβas different angles.

Furthermore, it is also possible as a matter of course to configure the object detecting section 11 so as to transmit the oscillatory waves in the width direction W of the self vehicle 1 and a direction offset toward the front side or the rear side of the self vehicle 1 relative to the width direction W. That is, as shown in Fig. 8, it is possible to configure such that the object detecting section 11 R transmits oscillatory wave in the width direction W of the self vehicle 1 and the object detecting section 11 F transmits oscillatory wave in a direction offset toward the front side of the self vehicle 1 relative to the width direction W thereof. Further alternatively, as shown in Fig. 9, it is possible to configure such that the object detecting section 11 F transmits oscillatory wave in the width direction W of the self vehicle 1 and the object detecting section 11 R transmits oscillatory wave in a direction offset toward the rear side of the self vehicle 1 relative to the width direction W thereof.

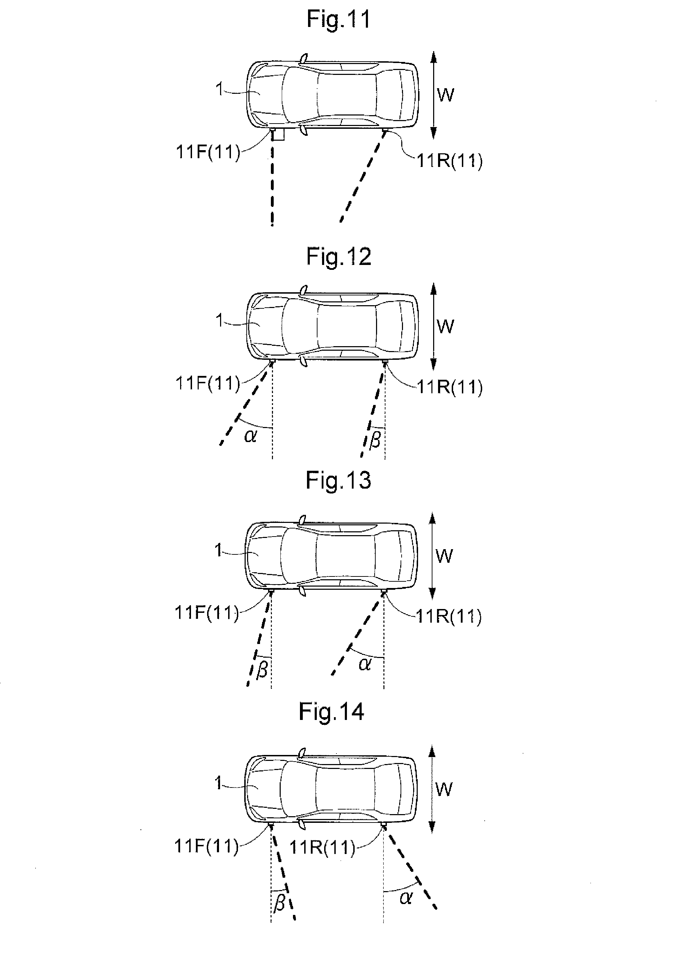

Still alternatively, as shown in Fig. 10, it is possible to configure such that the object detecting section 11 R transmits oscillatory wave in the width direction W of the self vehicle 1 and the object detecting section 11 F transmits oscillatory wave in a direction offset toward the rear side of the self vehicle 1 relative to the width direction W of the self vehicle 1. Still alternatively, as shown in Fig. 11, it is possible to configure such that the object detecting section 11 F transmits oscillatory wave in the width direction W of the self vehicle 1 and the object detecting section 11 R transmits oscillatory wave in a direction offset toward the front side of the self vehicle 1 relative to the width direction W of the self vehicle.

Further, it is also possible to configure such that the object detecting section 11 transmits oscillatory waves in a direction offset toward the front side or the rear side of the self vehicle 1 relative to the width direction W of the self vehicle 1 and in a direction different from the above offset direction on the side of the offset. That is, as shown in Fig. 12, it is possible to configure such that the object detecting section 11F transmits oscillatory waves in a direction offset by an angleatoward the front side of the self vehicle 1 relative to the width direction W and the object detecting section 11R transmits oscillatory waves in a direction offset by an angleβsmaller than the angleatoward the front side of the self vehicle 1 relative to the width direction W. Further alternatively, as shown in Fig. 13, it is possible to configure such that the object detecting section 11 R transmits oscillatory waves in a direction offset by the angleatoward the front side of the self vehicle 1 relative to the width direction W and the object detecting section 11 F transmits oscillatory waves in a direction offset by the angleβsmaller than the angleatoward the front side of the self vehicle 1 relative to the width direction W.

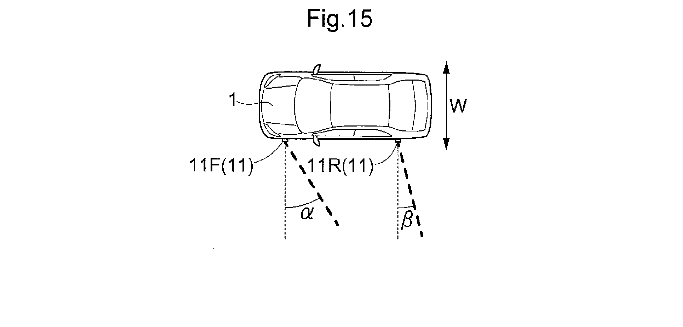

Still alternatively, as shown in Fig. 14, it is possible to configure such that the object detecting section 11R transmits oscillatory waves in a direction offset by the angleatoward the rear side of the self vehicle 1 relative to the width direction W and the object detecting section 11F transmits oscillatory waves in a direction offset by the angleβsmaller than the angleatoward the rear side of the self vehicle 1 relative to the width direction W. Further alternatively, as shown in Fig. 15, it is possible to configure such that the object detecting section 11 F transmits oscillatory waves in a direction offset by the angleatoward the rear side of the self vehicle 1 relative to the width direction W and the object detecting section 11R transmits oscillatory waves in a direction offset by the angleβsmaller than the angleatoward the rear side of the self vehicle 1 relative to the width direction W.

### INDUSTRIAL APPLICABILITY

The present invention can be used in a parking assisting device configured to set a parking target space in accordance with a movement of a vehicle.

### Description of Marks/Numerals

1: self vehicle
2 (2A, 2B): non-self vehicle
2R, 2L (2AR, 2AL, 2BR, 2BL): corner portions
11 (11 F, 11 R): object detecting section
12: corner-portion identifying section
13: target parking space setting section
100: parking assisting device
C: overlapped portion
E, E1, E2: center position
F: front end center position (front end position)
G: line
Q (QF, QR): shape data
S: target parking space
U: moving path
W: width direction

## Claims

1. A parking assisting device comprising:
an object detecting section transmitting, from a self vehicle, oscillatory waves in different directions on one lateral side of the self vehicle during traveling of the self vehicle and receiving reflected waves of the respective transmitted oscillatory waves transmitted in the different directions;
a corner-portion identifying section identifying a corner portion of a non-self vehicle present on the one lateral side, based on the reflected waves obtained by the object detecting section; and
a target parking space setting section setting a target parking space for the self vehicle, based on the corner portion of the non-self vehicle identified by the corner-portion identifying section.

2. The parking assisting device according to claim 1, wherein the corner-portion identifying section is configured to produce shape data representing a shape of the non-self vehicle in correspondence with the respective oscillatory waves transmitted in the different directions and to identify opposed ends of an overlapped portion in the produced shape data as the corner portion of the non-self vehicle.

3. The parking assisting device according to claim 1 or 2, wherein the device includes a plurality of the object detecting sections.

4. The parking assisting device according to any one of claims 1-3, wherein the object detecting section is configured to transmit the oscillatory waves in a direction offset toward a front side of the self vehicle relative to a width direction of the self vehicle and in a direction offset toward a rear side of the self vehicle relative to the width direction of the self vehicle.

5. The parking assisting device according to any one of claims 1-3, wherein the object detection section is configured to transmit the oscillatory waves in a width direction of the self vehicle and in a direction offset toward a front side of the self vehicle or a rear side of the self vehicle relative to the width direction of the self vehicle.

6. The parking assisting device according to any one of claims 1-3, wherein the object detecting section is configured to transmit the oscillatory waves in a direction offset toward a front side of the self vehicle or a rear side of the self vehicle relative to a width direction of the self vehicle and in a direction different from the offset direction on the offset side.

7. The parking assisting device according to any one of claims 1-6, wherein the corner-portion identifying section is configured to identify two corner portions of the non-self vehicle; and
the target parking space setting section is configured to set a front end position of the target parking space by causing a center portion between the two identified corner portions to move parallel with a movement path until it reaches a position of detection of the corner portions by the self vehicle.

8. The parking assisting device according to any one of claims 1-7, wherein the corner-portion identifying section is configured to identify two corner portions of the non-self vehicle; and
the target parking space setting section is configured to set the target parking space along a direction perpendicular to a line interconnecting the two identified corner portions.
